# EUROPEAN PATENT APPLICATION

(11) **EP 4 424 136 A1**
(43) Date of publication of application: **04.09.2024**
(21) Application number: 22946042.3
(22) Date of filing: 03.12.2022
(51) Int. Cl.: A01D 34/416

(54) **MOWER PROVIDED WITH CORD REEL**

(71) Applicant: Tomato Fudosan Co., Ltd., Miyagi 989-0701 (JP)
(72) Inventor: TARUMI, Masashi, Katta-gun Miyagi 9890701 (JP)
(74) Representative: Hasegawa, Kan
(86) International application number: PCT/JP2022/044641
(87) International publication number: WO 2024/116420

(57) **Abstract**

There is provided a grass cutter in which a cord can be easily replaced by a user and the length of the cord can be easily adjusted. The rotor section 30 of the grass cutter 10 has an upper cover 32, a lower cover 33 and cord reels 120 and 130 provided in an internal space formed by the upper cover 32 and the lower cover 33. The cord reels 120 and 130 are wound with two separate nylon cords 200. The length of the nylon cords 200 drawn from the cord reels 120 and 130 are adjusted by the cord adjustment mechanisms 400 provided on the upper cover 32.

## Description

### TECHNICAL FIELD

This invention relates to a grass cutter with a cord reel that can be attached to the grass cutter.

### BACKGROUND ART

Conventionally, a grass cutter (also called a grass mower) is known that has a motor, a shaft, and a rotary saw, and that the user operates a handle fixed to the shaft to cut grass and trees with thin trunks. A plastic cord such as a thick nylon cord is attached to the rotor part of the grass cutter where the rotary saw is attached, instead of the rotary saw, and used as a cord cutter for cutting grass (see Patent Literature 1). There are two types of grass cutters that use such cords: one is to wrap a long nylon cord around the rotor part of the grass cutter, and the other is to insert a short nylon cord that has been cut in advance into the rotor part of the grass cutter.

### Citation List

[Patent Literature 1] Japanese Patent Application Laid-open No. 2014-150765

### SUMMARY

### Problem to be Solved by the Invention

In both cases, the nylon cord gradually wears away from the tip, and the user must replace the nylon cord as needed.

In the case of a type of grass cutter that uses a long nylon cord, the replacement nylon cord is usually sold on the market wound on a reel. Therefore, the user must remove the replacement nylon cord from the reel and attach it to the rotor of the grass cutter in a prescribed procedure. This is a time-consuming and labor-intensive process that also requires familiarity. In addition, the type that uses a pre-cut short nylon cord is more expensive per unit length than the type that uses a long nylon cord, resulting in a larger economic burden.

It is also known that grass cutters that use a long nylon cord rotate two cord cutters to cut the grass. In such a conventional grass cutter, one long nylon cord is wound onto a reel from its center portion, and both ends of the single nylon cord are pulled out from the reel and used as two cord cutters. In this case, even if only one of the cord cutters (corresponding to one end of the nylon cord) is worn out, both ends of the nylon cord are inevitably pulled out when the nylon cord is withdrawn from the reel, resulting in two cord cutters being extended simultaneously, and each The length of each cord cutter cannot be adjusted independently.

The purpose of this invention is to provide a grass cutter that uses a cord (cord cutter) such as a long nylon cord wound on a reel, where the user can easily replace the cord, and where the length of the two cords can be easily adjusted.

### Solution to the Problem

According to an aspect of the present invention, there is provided a grass cutter including:
a rod with a handle;
a rotating shaft located at one end of the rod;
a drive source configured to supply drive power to the rotating shaft to rotate the shaft;
a cover member fixed to the rotating shaft, configured to rotate with rotation of the rotating shaft, and including a hollow housing space inside; and
two cord reels individually and removably housed in the housing space of the cover member, each of the two code reels including:
   an upper wall;
   a lower wall facing the upper wall in a vertical direction; and
   an axis-portion connecting a center of the upper wall and a center of the lower wall in the vertical direction,
wherein the two cord reels are arranged in the housing space of the cover member so that the two cord reels rotate independently of each other with the lower wall of one of the two cord reels and the upper wall of the other of the two cord reels in contact with each other or with a predetermined gap between the lower wall of one of the two cord reels and the upper wall of the other of the two cord reels,
wherein the two cord reels includes two cords wound around the two cord reels, respectively, and
wherein the cover member includes:
   two guide holes through which the two cords drawn from the two cord reels are inserted and drawn outward from the cover member; and
   two cord adjustment mechanisms configured to independently adjust the length of the two cords drawn from the two guide holes.

### Effect of the Invention

In the grass cutter in accordance with the present invention, the two cord reels are individually removable in the housing space formed inside the cover member. Therefore, the user can replace the two cord reels individually as needed. In addition, each of the two cord reels has a top wall and a bottom wall facing each other in the vertical direction. Therefore, even when the two cord reels are placed on top of each other, the lower wall of one cord reel and the upper wall of the other cord reel act as a barrier, and there is no risk of the two cords wounding the two cord reels becoming entangled.

In the grass cutter of the present invention, two cord adjustment mechanisms are provided on the cover member so that the user can easily adjust the cord length. In addition, two cord adjustment mechanisms correspond to the two cord reels, and the two cords are connected to different cord adjustment mechanisms. Therefore, the lengths of the two cords can be adjusted independently. Furthermore, the two cord reels are arranged to rotate independently of each other, so even if one cord reel rotates accordingly when the length of the nylon cord drawn from one cord reel is being adjusted, it will not affect the other cord reel.

### BRIEF DESCRIPTION OF THE DRAWINGS

FIG. 1 shows a schematic diagram of a grass cutter 10.
FIG. 2 shows a schematic illustration of a upper cover 32, a lower cover 33, and cord reels 120 and 130.
FIG. 3 shows a schematic illustration of the cord reels 120 and 130.
FIG. 4 is a schematic illustration of the upper cover 32 and the cord reel 120 viewed from above.
FIG. 5 shows a schematic illustration of the adjustment of the length of the nylon cord 200 using a cord adjustment mechanism 400.
FIG. 6 is a schematic illustration of a cord adjustment mechanism 450 with a stopper 451, a contacting portion 452, and a lock 453.
FIG. 7 shows a schematic illustration of a cord adjustment mechanism 480 with a lever 481 and a contacting portion 485.
FIGs. 8(a) and 8(b) are schematic illustrations to explain guides 491 and 492.

### DESCRIPTION OF THE EMBODIMENTS

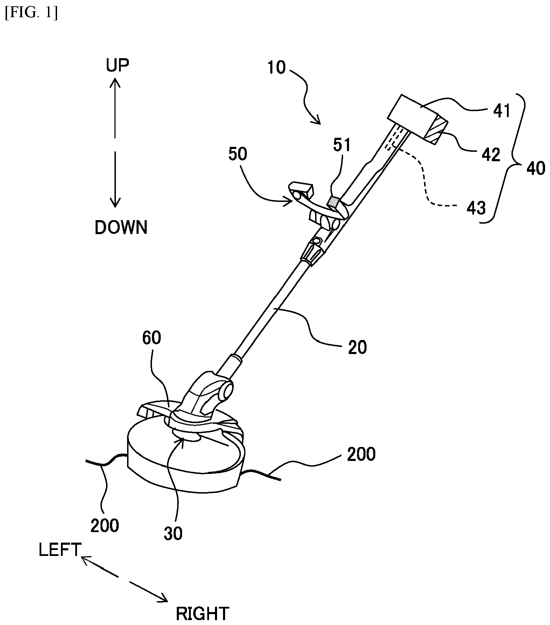

The grass cutter 10 of the present invention will be described with reference to the drawings. In the following description, the upper, lower, left, and right sides will be defined as shown in FIG. 1, respectively.

As shown in FIG. 1, the grass cutter 10 has a cylindrical rod 20, a rotor section 30 provided at one end of the rod 20, a drive section 40 provided at the end of the rod 20 opposite the rotor section 30, a handle 50 located on the side of the rod 20 near the drive section 20, and a guard 60 located on the side of the rod 20 near the rotor section 30.

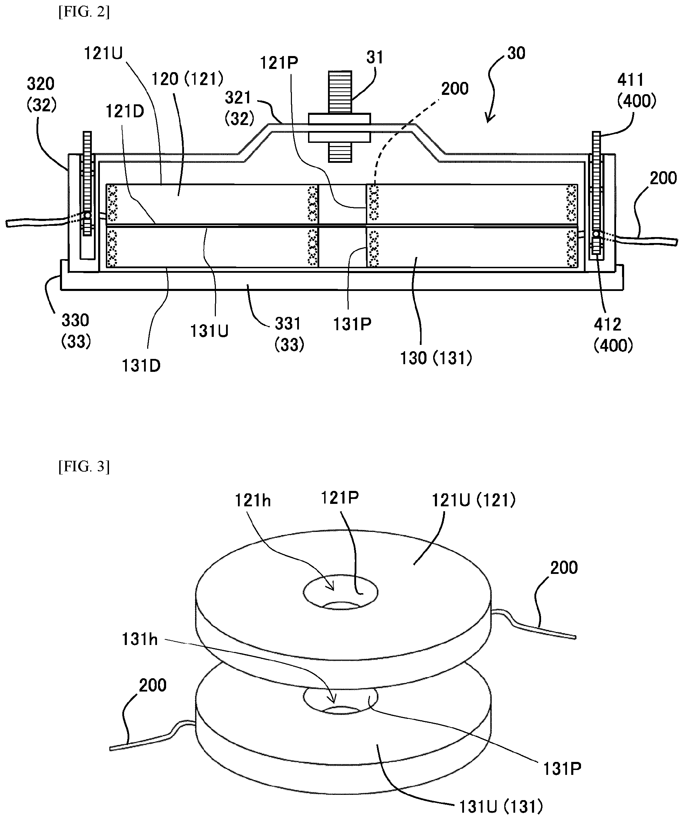

The cylindrical rod 20 is a hollow metal pipe about 1500 mm to 1700 mm long. The drive section 40 is attached at an upper end of the rod 20. The drive section 40 has a motor 41 and a battery 42 for supplying power to the motor 41. Rotation of a rotary shaft 43 of the motor 41 is transmitted to the rotor section 30 via an unshown transmission mechanism provided inside the rod 20. As shown in FIG. 2, the rotor section 30 includes: a shaft 31 configured to rotate by the rotational drive force transmitted from the rotational shaft 43 of the motor 41 through the transmission mechanism; an upper cover 32 and a lower cover 33 which are fixed to the shaft 31 and rotating with the shaft 31; and two cord reels 120, 130.

The handle 50 is a handle for the user to grasp the grass cutter 10 and has an abbreviated U-shape. A switch 51 linked to the motor 41 is attached to one end of the handle 50, and while the user turns on the switch 51, the motor 41 is driven to rotate the rotor section 30.

The upper cover 32 of the rotor section 30 is a metal cover member. As shown in FIG. 2, it has a side wall 320 of cylindrical shape and a circular upper wall 321 covering the upper part of the side wall 320. A hole is formed in the center of the upper wall 321 through which a shaft 31 is inserted. The shaft 31 is threaded with a male thread, and the upper cover 32 inserted into the shaft 31 is secured to the shaft 31 by a nut or other fastening member.

Similar to the upper cover 32, the lower cover 33 of the rotor section 30 is also a metal cover member, and has a side wall 330 of an abbreviated cylindrical shape and a circular lower wall 331 covering the lower part of the side wall 330. As shown in FIG. 2, the lower cover 33 is fixed to the lower part of the upper cover 32 by screwing or otherwise, so as to cover the upper cover 32 from below. When the lower cover 33 is attached to the upper cover 32, a cylindrical space is formed inside the upper cover 32 and lower cover 33 to contain the cord reels 120 and 130.

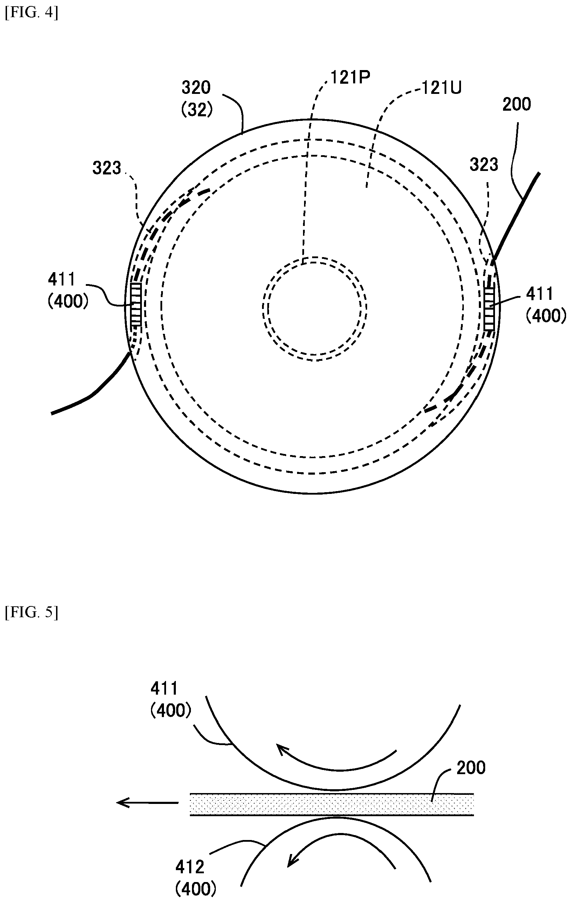

As mentioned above, the upper cover 32 can be fixed to the shaft 31. Furthermore, since the upper cover 32 and the lower cover 33 are fixed to each other with screws, etc., not only the upper cover 32 but also the lower cover 33 rotates as the shaft 31 rotates. The side wall 320 of the upper cover 32 has two guide holes 323 (see FIG. 4) for taking out the nylon cords 200 of the cord reels 120 and 130, as described below.

Next, the cord reels 120 and 130, which are arranged inside the space formed by the upper cover 32 and the lower cover 33 of the rotor section 30, will be described with reference to the drawings. As shown in FIG. 2, the cord reel 130 is arranged below the cord reel 120. The cord reels 120 and 130 have similar configurations. As shown in FIGs. 2 and 3, the cord reels 120 and 130 have covers 121 and 131 with hollow housing chambers. As shown in FIG. 2, the cover 121 has an upper wall 121U, a lower wall 121D, and an axis-portion 121P that connects the upper and lower walls 121U and 121D in a vertical direction. Similarly, the cover 131 has an upper wall 131U, a lower wall 131D, and an axis-portion 131P that connects the upper wall 131U and the lower wall 131D in the vertical direction. As shown in FIG. 3, the axis-portions 121P and 131P are provided in the covers 121 and 131, thereby forming through holes 121H and 131H in the covers 121 and 131 that pass through the upper walls 121U and 131U and the lower walls 121D and 131D in the vertical direction. In other words, as shown in FIG. 3, the covers 121 and 131 have a doughnut shape with the central portion of a cylinder hollowed out. One nylon cord 200 is wound around each of the hollow housing chambers inside the covers 121 and 131. A hole or slit (not shown) is formed in the outer circumference of the cover 121 to take out the nylon cord 200.

When the cord reel 130 is arranged under the cord reel 120, the lower wall 121D of cord reel 120 and the upper wall 131U of cord reel 130 may be in contact with each other, or they may be arranged to face each other, separated by a predetermined gap. In either case, the cord reel 120 and the cord reel 130 are arranged to rotate independently of each other.

As shown in FIGs. 2 and 4, the two nylon cords 200 drawn from the cord reels 120 and 130 are drawn through two body guide holes 323 in the side wall 320 of the upper cover 32. As shown in FIG. 4, a cord adjustment mechanism 400 is provided near the body guide holes 323 in the side wall 320 of the upper cover 32. As shown in FIG. 2, the cord adjustment mechanism 400 has a pair of gears (a first gear 411 and a second gear 412) provided on the upper cover 32 and an unshown locking portion that locks the rotation of the first gear 411. The first gear 411 and the second gear 412 are aligned vertically, and a nylon cord 200 is sandwiched between the first gear 411 and the second gear 412. The upper portion of the first gear 411 is exposed from the top surface of the upper cover 32, and the user can feed or retract the nylon cord 200 toward the body guide hole 323 by turning the upper portion of the first gear 411. This allows the user to properly adjust the length of the nylon cord 200 drawn out of the body guide hole 323 (see FIG. 5). The rotation of the first gear 411 can be locked by an unshown locking mechanism to fix the length of the nylon cord 200 drawn out of the body guide hole 323. With the length of the nylon cord 200 fixed, the motor can be driven to rotate the shaft 31 to rotate the nylon cord 200 for mowing.

Next, the method of replacing the cord reels 120 and 130 on the grass cutter 10 will be described. The tip of the nylon cord 200 gradually wears out when the grass cutter 10 is used to cut the grass. The user can purchase and replace the cord reels 120 and 130 on which the nylon cord 200 is wound. The two cord reels 120 and 130 can be replaced at the same time. It is also possible to replace only one of the two cord reels 120 and 130. In the following explanation, the case of replacing two cord reels 120 and 130 will be used as an example.

For replacement, at first, the screws between the upper cover 32 and the lower cover 33 is removed, and the lower cover 33 is removed from the upper cover 32. Next, the cord reel 120 to be replaced is removed from the upper cover 32. Next, new cord reels 120 and 130 are prepared and the cord reels 120 and 130 are attached to the upper cover 32. At this time, two nylon cords 200 are pulled out at an appropriate length from the take-out holes of covers 121 and 131, and each nylon cord 200 is passed between the first gear 411 and the second gear 412 of the cord adjustment mechanism 400 to attach the cord reels 120 and 130 to the upper cover 32. Furthermore, the nylon cord 200 is pulled out from the guide hole 323 of the upper cover 32.

Using the cord adjustment mechanism 400, the length of the nylon cord 200 pulled out of the guide hole 323 is adjusted to an appropriate length. The lower cover 33 is then mounted to cover the upper cover 32 from below and screwed down to secure the lower cover 33 to the upper cover 32. The first gear 411 is then locked so that the first gear 411 will not inadvertently rotate.

As explained above, in the grass cutter 10, the nylon cord 200 is wound on the cord reels 120 and 130, so the user can easily replace the nylon cord 200 with the entire cord reel 120 and 130. In doing so, the user does not have to wind the long nylon cord around the rotor part of the grass cutter as with conventional grass cutters, which saves time and effort for the user and allows easy replacement of the nylon cord even for users who are not familiar with machine operation. Also, when the user wants to use a nylon cord of a different thickness, he/she only needs to replace the entire cord reels 120 and 130, which saves a great deal of time and effort compared to conventional grass cutters. In addition, the two cord reels 120 and 130 are not integrated so that they are connected to each other, but can be removed and replaced individually. Therefore, the two cord reels 120 and 130 do not necessarily need to be replaced at the same time, and only one of them can be replaced, allowing the cord to be used without waste.

In the grass cutter 10 of the present invention, the replaceable cord reels 120 and 130 are covered by the metal upper cover 32 and the metal lower cover 33, so that even if small stones or other objects fly into the cord reels 120 and 130 during the work of mowing the grass, they may not directly hit the cord reels 120, 130. Therefore, there is no need to form the covers 121, 131 of the cord reels 120, 130 with metal materials, etc., and the covers 121, 131 of the cord reels 120, 130 can be formed with lightweight materials such as plastic or resin, for example, to reduce weight and cost.

In the grass cutter 10, the two cord reels 120 and 130 are individually removable in the compartment formed by the upper cover 32 and lower cover 33. Therefore, the user can replace the cord reels 120 and 130 individually. The cord reels 120 and 130 each have an upper wall 121U, 131U and a lower wall 121D, 131D, respectively, facing each other in the vertical direction. Therefore, when the cord reel 130 is placed on top of the cord reel 120, the lower wall 121D of the cord reel 120 and the upper wall 131U of the cord reel 130 act as a barrier and there is no risk of the two nylon cords 200 getting tangled.

In the grass cutter 10 of the present invention, two cord adjustment mechanisms 400 are provided on the upper cover 32 so that the user can easily adjust the length of the nylon cord 200. The grass cutter for the present invention is also provided with two cord adjustment mechanisms 400 corresponding to the two cord reels 120 and 130. The two nylon cords 200 are connected to separate cord adjustment mechanisms 400. Therefore, the lengths of the two nylon cords 200 can be adjusted independently. The two cord reels 120 and 130 are arranged to rotate independently of each other, so that even if one cord reel rotates accordingly when the length of the nylon cord drawn from one cord reel is being adjusted, it will not affect the other cord reel.

The invention is not limited to the above embodiments but can be modified to the extent that it does not depart from the intent of the invention. For example, the cord reels 120 and 130 were wound with nylon cords 200, but they do not necessarily have to be made of nylon, and cords formed of other resins or the like may be used. The outer shape of the cord reels 120 and 130 does not necessarily have to be doughnut-shaped, and can be made into any appropriate shape. In the above embodiments, the cord reels 120, 130 were provided with covers 121, 131, and the nylon cords 200 were housed in hollow accommodation chambers inside the covers 121, 131. However, the cord reels 120 and 130 do not necessarily have to be provided with covers 121 and 131 with hollow accommodation chambers. Like covers 121 and 131, they may, for example, have a nylon cord 200 wound around a spool (winding frame) as long as it has a portion corresponding to the upper and lower walls and the axis-portion. Thus, the cord reels 120 and 130 can be shaped as desired, so, for example, commercially available replacement cord reels can be used as they are.

In the above embodiment, the two cord adjustment mechanisms 400 were provided on the upper cover 32, but they need not necessarily be provided on the upper cover 32, and may be provided on the lower cover 33. The configuration of the cord adjustment mechanism 400 is not necessarily limited to the configuration of the above embodiment, but may be realized by other configurations as long as it has a function to adjust and fix the length of the nylon cord 200 drawn from the cord reels 120 and 130. Other configurations of the cord adjustment mechanism 400 will be described below with examples, but the invention is not limited to these examples.

Instead of the first gear 411 and second gear 412 of the cord adjustment mechanism 400, a wheel with a non-slip surface such as rubber can be used. Alternatively, the configuration of the cord adjustment mechanism 400 is not limited toa mechanism that adjusts the length of the nylon cord 200 as the gear or wheel with non-slip surface rotates, but can be a mechanism that adjusts the length of the nylon cord 200 as it slides along, such as a slider.

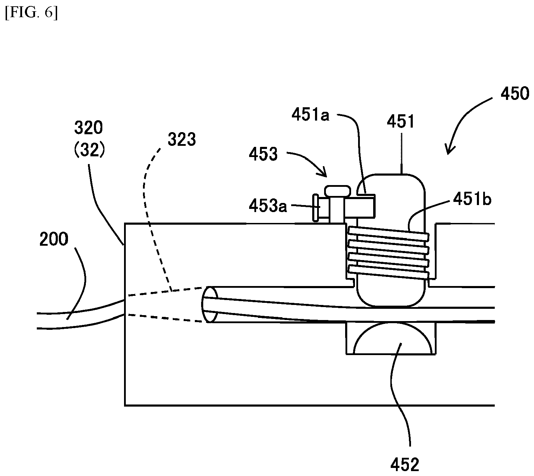

Alternatively, as shown in FIG. 6, the cord adjustment mechanism 450 may have a stopper 451 that moves vertically to a contacting position that contacts the nylon cord 200 and a separating position that moves away from the nylon cord 200, and a contacting portion 452 that faces the stopper 451 at the bottom of the stopper 451, The stopper 451 may have a locking portion 453 that secures the stopper 451 in the contacting position. The locking section 453 has a locking pin 453a that moves horizontally, and the side of the stopper 451 has a hole 451a into which the locking pin 453a is inserted. The stopper 451 is provided with a spring 451b. With the stopper 451 pushed into the tangent position against the spring 451b and the lock pin 453a inserted into the hole 451a, the nylon cord 200 can be clamped and secured between the stopper 451 and the contacting portion 452. By pulling the lock pin 453a out of the hole 451a and pushing the stopper 451 up to the release position with the spring 451b, the nylon cord 200 can be freely moved between the stopper 451 and the contacting portion 452.

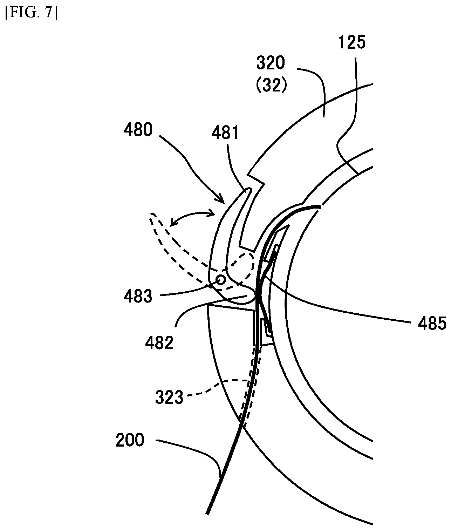

Alternatively, as shown in FIG. 7, the cord adjustment mechanism 480 may have a lever 481 that rotates around an axis 483 to a contacting position and a separating position, and a contacting portion 485 that faces the base end 482 of the lever 481 in the contacting position. The contacting position is the position of the lever 481 indicated by the solid line in FIG. 7, where the base end 482 of the lever 481 is in contact with the nylon cord 200. The separating position is the position of the lever 481 indicated by the dotted line in FIG. 7, and is the position where the base end 482 of the lever 481 is separated from the nylon cord 200. The contacting portion 485 is an elastic member such as a plate spring or rubber. When the lever 481 is rotated toward the contacting position, the base end 482 of the lever 481 is pressed toward the contacting portion 485. At this time, the nylon cord 200 can be clamped and secured between the base end 482 of the lever 481 and the contacting portion 485. When the lever 481 is rotated toward the separating position, a gap is created between the base end 482 of the lever 481 and the contacting portion 485. This allows the nylon cord 200, which was fixed by being pinched between the base end 482 of the lever 481 and the contacting portion 485, to move freely.

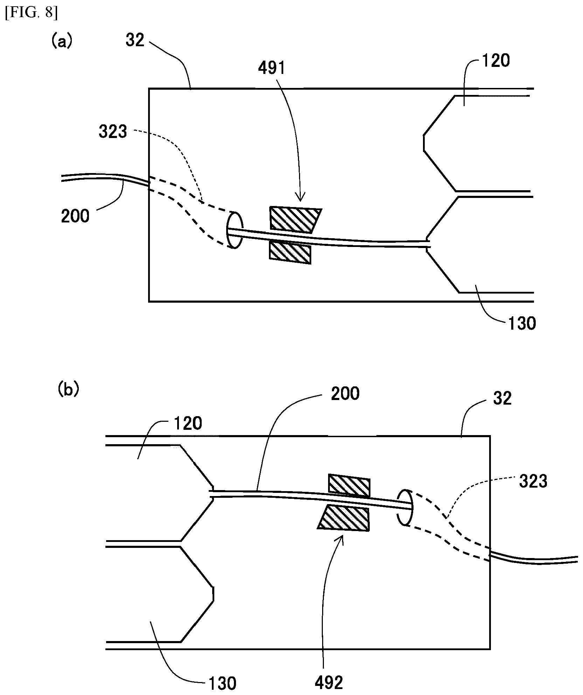

As shown in FIGs. 8(a) and 8(b), to align the vertical height of the nylon cord 200 drawn from the cord reel 130 with the nylon cord 200 drawn from the cord reel 120, a guides 491 and a guide 492 that guide the nylon cord 200 drawn from the cord reel 120 downward may be provided on the upper cover 32. This allows the height difference between the nylon cord 200 drawn from the cord reel 130 and the nylon cord 200 drawn from the cord reel 120 to be controlled and guided into the guide hole 323 in the body. In FIGs 8(a) and 8(b), the cord adjustment mechanism 480 is omitted.

In the above embodiment, the grass cutter 10 was equipped with a battery 42 and was driven by electric power, but the invention is not limited to such a manner and may be driven by an engine, for example.

## Claims

1. A grass cutter comprising:
a rod with a handle;
a rotating shaft located at one end of the rod;
a drive source configured to supply drive power to the rotating shaft to rotate the shaft;
a cover member fixed to the rotating shaft, configured to rotate with rotation of the rotating shaft, and including a hollow housing space inside; and
two cord reels individually and removably housed in the housing space of the cover member, each of the two code reels including:
an upper wall;
a lower wall facing the upper wall in a vertical direction; and
an axis-portion connecting a center of the upper wall and a center of the lower wall in the vertical direction,
wherein the two cord reels are arranged in the housing space of the cover member so that the two cord reels rotate independently of each other with the lower wall of one of the two cord reels and the upper wall of the other of the two cord reels in contact with each other or with a predetermined gap between the lower wall of one of the two cord reels and the upper wall of the other of the two cord reels,
wherein the two cord reels includes two cords wound around the two cord reels, respectively, and
wherein the cover member includes:
two guide holes through which the two cords drawn from the two cord reels are inserted and drawn outward from the cover member; and
two cord adjustment mechanisms configured to independently adjust the length of the two cords drawn from the two guide holes.

2. The grass cutter according to claim 1,
wherein each of the cord adjustment mechanisms includes a pair of gears or a pair of non-slip wheels configured to sandwich one of the two cords.

3. The grass cutter according to claim 1,
wherein each of the cord adjustment mechanisms includes:
a stopper configured to move in the vertical direction between a contacting position in which the stopper contacts one of the two cords and a separating position in which the stopper is separated from the one of the two cords;
a contacting portion located opposite the stopper so that in a case that the stopper is in the contacting position, the contacting portion and the stopper pinch the one of the two cords; and
a locking portion configured to secure the stopper in the contacting position.

4. The grass cutter according to claim 1,
wherein each of the cord adjustment mechanism includes:
a lever configured to pivots between a contacting position in contact with one of the two cords and a separating position away from the one of the two cords; and
a contacting portion located opposite the lever so that in a case that the lever is in the contacting position, the contacting portion and the lever pinch the one of the two cords.
